# EUROPÄISCHE PATENTSCHRIFT

(11) **EP 3 935 224 B1**
(45) Veröffentlichungstag und Bekanntmachung des Hinweises auf die Patenterteilung: **30.04.2025**
(21) Anmeldenummer: 20710821.8
(22) Anmeldetag: 28.02.2020
(51) Int. Cl.: E03C 1/02, E03C 1/04, F16K 11/052

(54) **SANITÄRARMATUR MIT EINEM ZWEIWEGEVENTIL**
SANITARY FITTING HAVING A TWO-WAY VALVE
ROBINETTERIE SANITAIRE COMPRENANT UNE VANNE À DEUX VOIES

(30) Priorität: 08.03.2019 DE 102019105975
(43) Veröffentlichungstag der Anmeldung: 12.01.2022
(73) Patentinhaber: Grohe AG, 58675 Hemer (DE)
(72) Erfinder: TUESHAUS, Jan Philipp, 58675 Hemer (DE); GAIDA, Waldemar, 40549 Düsseldorf (DE); MIELKE, Achim, 32457 Porta Westfalica (DE); JUNG, Andreas, 58730 Froendenberg (DE)
(86) Internationale Anmeldenummer: PCT/EP2020/055286
(87) Internationale Veröffentlichungsnummer: WO 2020/182490

(56) Entgegenhaltungen:
- DE-A1- 2 725 047
- DE-B- 1 193 752
- US-A- 5 184 777
- US-A- 5 937 905

## Beschreibung

Die vorliegende Erfindung betrifft eine Sanitärarmatur mit einem Zweiwegeventil. Solche Sanitärarmaturen dienen insbesondere der bedarfsgerechten Bereitstellung einer Flüssigkeit an Waschbecken, Spülbecken, Duschen oder Badewannen.

Es sind Sanitärarmaturen bekannt, beispielsweise aus US 5,937,905 A und US 5,184,777 A, mit denen eine Flüssigkeit mit unterschiedlichen Strahlarten, beispielsweise in Form von Regenstrahlen, Vollstrahlen, Massagestrahlen oder Perlstrahlen, abgebbar sind. Die Umstellung zwischen den einzelnen Strahlarten kann über manuell betätigbare Betätigungselemente an den Sanitärarmaturen erfolgen, über die beispielsweise Ventile in Flüssigkeitskanälen der Sanitärarmaturen steuerbar sind, sodass die Flüssigkeit einem Strahlbildner für die gewünschte Strahlart zuführbar ist. Die bekannten Ventile weisen einen hohen Bauraumbedarf auf, sodass diese entweder nicht in die Sanitärarmaturen integriert werden können oder die Sanitärarmaturen besonders groß ausgeführt werden müssen. Dies schränkt jedoch die Gestaltungsfreiheit der Sanitärarmaturen ein und erhöht zudem deren Materialbedarf. Zudem sind weitere Sanitärarmaturen mit Ventilen bekannt geworden, beispielsweise aus DE 1 193 752 B und DE 27 25 047 A1.

Aufgabe der Erfindung ist es daher, die mit Bezug auf den Stand der Technik geschilderten Probleme zumindest teilweise zu lösen und insbesondere eine Sanitärarmatur anzugeben, dessen Ventile einen geringen Bauraumbedarf aufweisen.

Diese Aufgabe wird gelöst mit einer Sanitärarmatur gemäß den Merkmalen des unabhängigen Patentanspruchs. Weitere vorteilhafte Ausgestaltungen der Erfindung sind in den abhängigen Patentansprüchen angegeben. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt eine Sanitärarmatur bei, die zumindest die folgenden Komponenten aufweist:
- ein Armaturengehäuse,
- einen ersten Strahlbildner,
- einen zweiten Strahlbildner, und
- ein Zweiwegeventil, mit dem eine Flüssigkeit wahlweise dem ersten Strahlbildner oder dem zweiten Strahlbildner zuführbar ist, wobei das Zweiwegeventil in dem Armaturengehäuse angeordnet ist und einen Ventilkörper aufweist, der in einem Ventilgehäuse des Zweiwegeventils zwischen einem ersten Ventilsitz eines ersten Ablaufs des Zweiwegeventils und einem zweiten Ventilsitz eines zweiten Ablaufs des Zweiwegeventils um eine Drehachse drehbar gelagert ist.

Die Sanitärarmatur dient insbesondere der bedarfsgerechten Bereitstellung von Flüssigkeiten, wie insbesondere Wasser, an Spülbecken, Waschbecken, Duschen und/oder Badewannen. Hierzu kann der Sanitärarmatur insbesondere ein Kaltwasser mit einer Kaltwassertemperatur und ein Warmwasser mit einer Warmwassertemperatur zuführbar sein. Das Kaltwasser und Warmwasser ist durch die Sanitärarmatur insbesondere, beispielsweise mittels eines Mischventils oder einer (Thermostat-)Mischkartusche, zu einem Mischwasser mit einer gewünschten Mischwassertemperatur mischbar. Die Kaltwassertemperatur beträgt insbesondere maximal 25 °C (Celsius), bevorzugt 1 °C bis 25 °C, besonders bevorzugt 5 °C bis 20 °C und/oder die Warmwassertemperatur insbesondere maximal 90 °C, bevorzugt 25 °C bis 90 °C, besonders bevorzugt 55 °C bis 65 °C. Das Mischventil oder die (Thermostat-)Mischkartusche können durch einen Benutzer mittels einem ersten Betätigungselement der Sanitärarmatur, beispielsweise nach Art eines Hebels, betätigbar und/oder in einem Armaturengehäuse der Sanitärarmatur angeordnet sein. Das Armaturengehäuse besteht insbesondere zumindest teilweise aus Kunststoff und/oder (Guss-)Metall, wie zum Beispiel Messing. Das Armaturengehäuse ist an einem Träger, beispielsweise einer Arbeitsplatte, Spülbecken, Waschbecken, Badewanne oder Dusche, befestigbar. Weiterhin weist das Armaturengehäuse einen (hervorstehenden bzw. abzweigenden) Auslauf auf, der starr oder bewegbar mit dem Armaturengehäuse verbunden ist. Der Auslauf kann zumindest teilweise rohrförmig ausgebildet und/oder Teil des Armaturengehäuses sein.

Die Flüssigkeit ist durch die Sanitärarmatur in einer Mehrzahl von Strahlarten abgebbar. Hierzu weist die Sanitärarmatur zumindest einen ersten Strahlbildner und einen zweiten Strahlbildner auf. Insbesondere weist die Sanitärarmatur nur den ersten Strahlbildner und den zweiten Strahlbildner auf, sodass die Flüssigkeit in der ersten Strahlart und/oder der zweiten Strahlart abgebbar ist. Bei den Strahlarten kann es sich beispielsweise um Regenstrahlen, Vollstrahlen, Massagestrahlen und/oder Perlstrahlen handeln. Insbesondere kann die Flüssigkeit bei der Benutzung der Sanitärbrause entweder in einer einzigen Strahlart oder in zwei unterschiedlichen Strahlarten gleichzeitig abgebbar sein. Die Sanitärarmatur kann je Strahlart einen Strahlbildner aufweisen. Der erste Strahlbildner und/oder der zweite Strahlbildner können zumindest eine Düse und/oder zumindest eine Auslassöffnung für die Flüssigkeit aufweisen, durch die zumindest ein für die jeweilige Strahlart spezifischer Sprühstrahl der Flüssigkeit bildbar ist.

Zum Wechseln der Strahlart weist die Sanitärarmatur ein Zweiwegeventil auf, mittels dem die Flüssigkeit wahlweise dem ersten Strahlbildner und/oder dem zweiten Strahlbildner zuführbar ist. Das Zweiwegeventil ist insbesondere zumindest teilweise in dem Armaturengehäuse und/oder dem Auslauf des Armaturengehäuses der Sanitärarmatur angeordnet. Weiterhin weist das Zweiwegeventil insbesondere einen Zulauf für die Flüssigkeit bzw. das Mischwasser und zwei Abläufe auf. Der Zulauf ist insbesondere flüssigkeitsleitend mit dem Mischventil oder der (Thermostat-)Mischkartusche verbunden. Der erste Ablauf kann über eine erste Ablaufleitung mit dem ersten Strahlbildner und der zweite Ablauf über eine zweite Ablaufleitung mit dem zweiten Strahlbildner flüssigkeitsleitend verbunden sein. Das Zweiwegeventil kann zudem elektrisch betätigbar sein. Hierzu kann die Sanitärarmatur ein zweites Betätigungselement, beispielsweise nach Art eines Druckknopfs, aufweisen, mittels dem die eingestellte Strahlart der Sanitärarmatur änderbar ist. Das zweite Betätigungselement kann mit einer Steuerung der Sanitärarmatur datenleitend verbunden sein, mittels der ein Aktor des Zweiwegeventils steuerbar ist. Die Steuerung kann zumindest einen Mikroprozessor umfassen. Das Zweiwegeventil ist mittels des (elektrisch betriebenen) Aktors betätigbar. Der Aktor kann zumindest einen Elektromagnet und/oder zumindest einen Draht umfassen, der zumindest teilweise aus einer Formgedächtnislegierung besteht. Aktoren mit Drähten aus einer Formgedächtnislegierung können besonders klein ausgebildet werden, wodurch der Bauraumbedarf weiter reduzierbar ist. Bei der Betätigung des Zweiwegeventils wird ein Ventilkörper des Zweiwegeventils in einem Ventilgehäuse des Zweiwegeventil zwischen einem ersten Ventilsitz des ersten Ablaufs und einem zweiten Ventilsitz des zweiten Ablaufs um eine Drehachse gedreht. Hierzu ist der Ventilkörper in dem Ventilgehäuse um die Drehachse drehbar gelagert. Der Ventilkörper kann zwischen dem ersten Ventilsitz und dem zweiten Ventilsitz beispielsweise mit einem Drehwinkel von 10° bis 180°, bevorzugt 10° bis 90°, besonders bevorzugt 30° bis 60° und ganz besonders bevorzugt 40 bis 50° drehbar sein. Ist der Ventilkörper gegen den ersten Ventilsitz gedreht, ist der erste Ablauf geschlossen. Ist der Ventilkörper gegen den zweiten Ventilsitz gedreht, ist entsprechend der zweite Ablauf geschlossen. Befindet sich der Ventilkörper in einer Drehposition zwischen dem ersten Ventilsitz und dem zweiten Ventilsitz, sind der erste Ablauf und der zweite Ablauf zumindest teilweise geöffnet. Der Ventilkörper kann nach Art einer Klappe ausgebildet sein. Hierdurch kann das Zweiwegeventil besonders klein ausgebildet und dadurch in das Armaturengehäuse bzw. in den Auslauf des Armaturengehäuses integriert werden.

Der Ventilkörper weist eine erste Dichtfläche für den ersten Ventilsitz und eine zweite Dichtfläche für den zweiten Ventilsitz auf. Bei der ersten Dichtfläche handelt es sich insbesondere um diejenige Fläche des Ventilkörpers, mit dem der Ventilkörper den ersten Ventilsitz kontaktiert, wenn der Ventilkörper gegen den ersten Ventilsitz gedreht ist. Bei der zweiten Dichtfläche handelt es sich entsprechend insbesondere um diejenige Fläche des Ventilkörpers, mit dem der Ventilkörper den zweiten Ventilsitz kontaktiert, wenn der Ventilkörper gegen den zweiten Ventilsitz gedreht ist.

Die erste Dichtfläche und die zweite Dichtfläche können parallel zu der Drehachse des Ventilkörpers verlaufen.

Die erste Dichtfläche und die zweite Dichtfläche spannen einen ersten Winkel auf.

Der erste Winkel kann 10° bis 170° betragen. Bevorzugt beträgt der erste Winkel 30° bis 120° oder besonders bevorzugt 30° bis 60°.

Die erste Dichtfläche ist an einem ersten Ventilkörperarm des Ventilkörpers und die zweite Dichtfläche an einem zweiten Ventilkörperarm des Ventilkörpers angeordnet . Der erste Ventilkörperarm und/oder der zweite Ventilkörperarm erstrecken sich von der Drehachse insbesondere zumindest teilweise in eine radiale Richtung. Die erste Dichtfläche ist insbesondere in eine erste Drehrichtung des Ventilkörpers orientiert und/oder die zweite Dichtfläche insbesondere in eine zweite Drehrichtung des Ventilkörpers orientiert.

Der erste Ventilkörperarm und der zweite Ventilkörperarm können einen zweiten Winkel aufspannen. Der zweite Winkel kann insbesondere 10° bis 170°, bevorzugt 30° bis 120° oder besonders bevorzugt 30° bis 60° betragen.

Der Ventilkörper kann V-förmig ausgebildet sein. Dabei ist die V-Form insbesondere durch den ersten Ventilkörperarm und den zweiten Ventilkörperarm gebildet. Ist der Ventilkörper mit seiner ersten Dichtfläche gegen den ersten Ventilsitz gedreht, kann der Ventilkörper durch die V-Form insbesondere allein durch den Flüssigkeitsdruck der über den Zulauf zuströmenden Flüssigkeit an dem ersten Ventilsitz gehalten werden. Ist der Ventilkörper mit seiner zweiten Dichtfläche gegen den zweiten Ventilsitz gedreht, kann der Ventilkörper durch die V-Form entsprechend insbesondere allein durch den Flüssigkeitsdruck der über den Zulauf zuströmenden Flüssigkeit an dem zweiten Ventilsitz gehalten werden. Hierdurch kann die für die Betätigung des Zweiwegeventils benötigte elektrische Energie reduziert werden.

Die Drehachse kann zwischen dem ersten Ablauf und dem zweiten Ablauf angeordnet sein. Insbesondere kann die Drehachse zwischen einem ersten Ablaufkanal des ersten Ablaufs und einem zweiten Ablaufkanal des zweiten Ablaufs angeordnet sein.

Der erste Ablauf und der zweite Ablauf können parallel zueinander verlaufen. Insbesondere verlaufen der erste Ablaufkanal des ersten Ablaufs und der zweite Ablaufkanal des zweiten Ablaufs innerhalb des Ventilgehäuses parallel zueinander. Hierdurch kann der Bauraumbedarf weiter reduziert werden.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: eine Sanitärarmatur;
- Fig. 2:: ein Zweiwegeventil der Sanitärarmatur;
- Fig. 3:: das Zweiwegeventil in einer ersten Betriebsstellung in einer Schnittdarstellung;
- Fig. 4:: das Zweiwegeventil in einer zweiten Betriebsstellung in der Schnittdarstellung;
- Fig. 5:: das Zweiwegeventil in einer dritten Betriebsstellung in der Schnittdarstellung; und
- Fig. 6:: das Zweiwegeventil in der ersten Betriebsstellung mit dargestelltem Aktor.

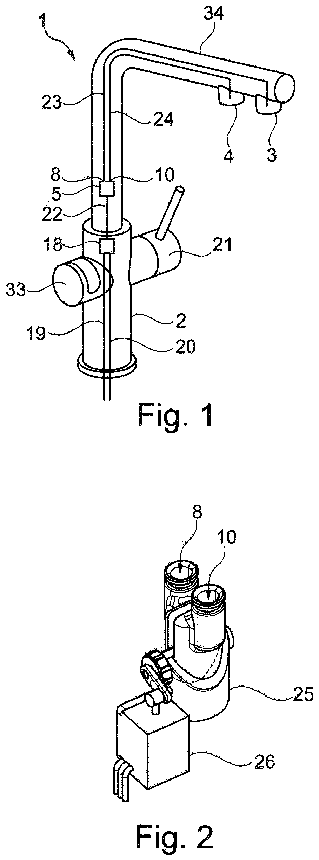

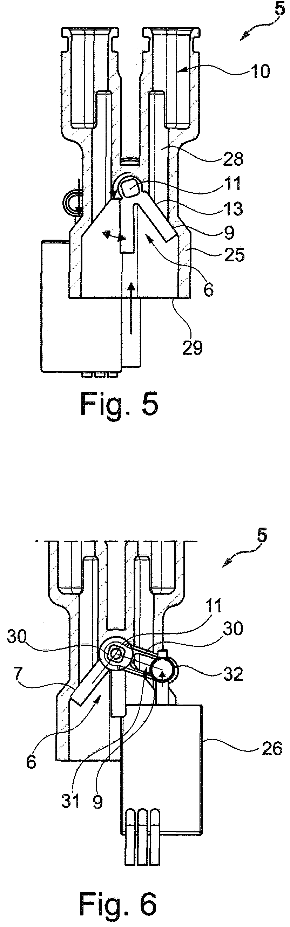

Die Fig. 1 zeigt eine Sanitärarmatur 1. Die Sanitärarmatur 1 umfasst ein Armaturengehäuse 2, dessen Auslauf 34 einen ersten Strahlbildner 3 und einen zweiten Strahlbildner 4 aufweist. In dem Armaturengehäuse 2 ist ein Mischventil 18 angeordnet, dem über eine Kaltwasserleitung 19 Kaltwasser mit einer Kaltwassertemperatur und über eine Warmwasserleitung 20 Warmwasser mit einer Warmwassertemperatur zuführbar ist. Das Kaltwasser und das Warmwasser sind durch das Mischventil 18 zu einem Mischwasser mit einer gewünschten Mischwassertemperatur mischbar. Zur Betätigung des Mischventils 18 weist die Sanitärarmatur 1 ein erstes Betätigungselement 21 auf, das hier nach Art eines Hebels ausgebildet ist. Mittels des Betätigungselements 21 ist die Mischwassertemperatur und einem Volumenstrom des Mischwassers einstellbar. Das Mischventil 18 ist über einen Mischwasserkanal 22 einem Zweiwegeventil 5 zuführbar. Durch das Zweiwegeventil 5 ist das Mischwasser wahlweise dem ersten Strahlbildner 3 und/oder dem zweiten Strahlbildner 4 zuführbar. Hierzu ist ein erster Ablauf 8 des Zweiwegeventils 5 über eine erste Ablaufleitung 23 mit dem ersten Strahlbildner 3 und ein zweiter Ablauf 10 über eine zweite Ablaufleitung 24 mit dem zweiten Strahlbildner 4 verbunden. Die Sanitärarmatur 1 weist zur Betätigung des Zweiwegeventils 5 ein zweites Betätigungselement 33 auf, das hier nach Art eines Druckknopfs ausgebildet ist. Das zweite Betätigungselement 33 kann datenleitend mit einer hier nicht gezeigten Steuerung eines in der Fig. 2 und 6 gezeigten Aktors 26 verbunden sein.

Die Fig. 2 zeigt das Zweiwegeventil 5 in einer perspektivischen Darstellung. Das Zweiwegeventil 5 umfasst ein Ventilgehäuse 25 mit dem ersten Ablauf 8 und dem zweiten Ablauf 10. In dem Ventilgehäuse 25 ist ein hier nicht sichtbarer Ventilkörper 6 angeordnet, der mit einem Aktor 26 um eine hier ebenfalls nicht gezeigten Drehachse 11 drehbar gelagert ist.

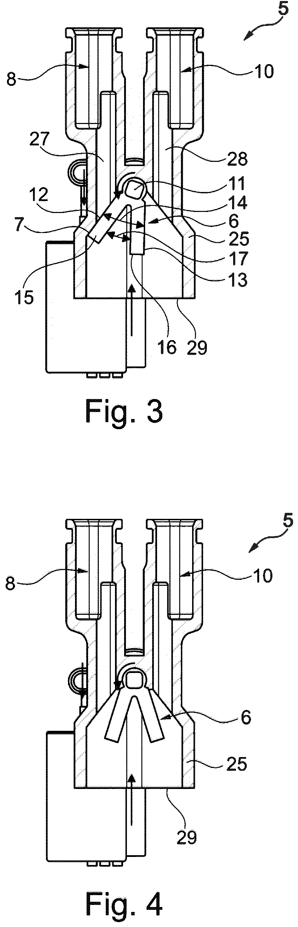

Die Fig. 3 zeigt das Zweiwegeventil 5 in einer ersten Betriebsstellung in einer Schnittdarstellung. Zu erkennen ist der in dem Ventilgehäuse 25 angeordnete Ventilkörper 6. Der Ventilkörper 6 weist einen ersten Ventilkörperarm 15 mit einer ersten Dichtfläche 12 und einen zweiten Ventilkörperarm 16 mit einer zweiten Dichtfläche 13 auf. Die erste Dichtfläche 12 und die zweite Dichtfläche 13 spannen einen ersten Winkel 14 auf, der hier (circa) 45° beträgt. Zudem spannen der erste Ventilkörperarm 15 und der zweite Ventilkörperarm 16 einen zweiten Winkel 17 auf, der hier ebenfalls (circa) 45° beträgt. Der Ventilkörper 6 ist daher V-förmig ausgebildet. In der hier gezeigten ersten Betriebsstellung ist der Ventilkörper 6 um die Drehachse 11 (im Uhrzeigersinn) gegen einen ersten Ventilsitz 7 des ersten Ablaufs 8 gedreht, sodass die erste Dichtfläche 12 einen ersten Ablaufkanal 27 des ersten Ablaufs 8 verschließt. Das Ventilgehäuse 25 des Zweiwegeventils 5 weist einen Zulauf 29 auf, der mit dem in der Fig. 1 gezeigten Mischwasserkanal 22 verbindbar ist, sodass das Mischwasser über den Zulauf 29 in das Ventilgehäuse 25 strömen kann. Die Flüssigkeit kann aufgrund des geschlossenen ersten Ablaufs 8 das Zweiwegeventil 5 jedoch nur über einen zweiten Ablaufkanal 28 des zweiten Ablaufs 10 verlassen, sodass das Mischwasser in der ersten Betriebsstellung des Zweiwegeventils 5 über die in der Fig. 1 gezeigte zweite Ablaufleitung 24 dem zweiten Strahlbildner 4 zuführbar ist. Der erste Ablauf 8 und der zweite Ablauf 10 sind spiegelsymmetrisch ausgebildet, sodass der erste Ablaufkanal 1 des ersten Ablaufs 8 und der zweite Ablaufkanal 28 des zweiten Ablaufs 10 parallel zueinander verlaufen. Die Drehachse 11 ist zwischen dem ersten Ablauf 8 und dem zweiten Ablauf 10 bzw. zwischen dem ersten Ablaufkanal 27 und dem zweiten Ablaufkanal 28 angeordnet.

Die Fig. 4 zeigt das Zweiwegeventil 5 in einer zweiten Betriebsstellung. In der zweiten Betriebsstellung befindet sich der Ventilkörper 6 in einer Mittelstellung, in der der Ventilkörper 6 weder den ersten Ablauf 8 noch den zweiten Ablauf 10 verschließt. Hierdurch kann das dem Ventilgehäuse 25 über den Zulauf 29 zuströmende Mischwasser das Zweiwegeventil 5 sowohl über den ersten Ablauf 8 als auch über den zweiten Ablauf 10 verlassen. Somit wird das Mischwasser über die in der Fig. 1 gezeigte erste Ablaufleitung 23 und die zweite Ablaufleitung 24 sowohl dem ersten Strahlbildner 3 als auch dem zweiten Strahlbildner 4 zugeführt.

Die Fig. 5 zeigt das Zweiwegeventil 5 in einer dritten Betriebsstellung. In der dritten Betriebsstellung wurde der Ventilkörper 6 gegen den Uhrzeigersinn gegen einen zweiten Ventilsitz 9 des zweiten Ablaufs 10 gedreht, sodass die zweite Dichtfläche 13 den zweiten Ablaufkanal 28 des zweiten Ablaufs 10 verschließt. Hierdurch kann das dem Ventilgehäuse 25 über den Zulauf 29 zuströmende Mischwasser das Zweiwegeventil 5 nur über den ersten Ablauf 8 verlassen. Somit ist das Mischwasser in der dritten Betriebsstellung des Zweiwegeventils 5 über die in der Fig. 1 gezeigte erste Ablaufleitung 23 (nur) dem ersten Strahlbildner 3 zuführbar.

Die Fig. 6 zeigt das Zweiwegeventil 5 in der ersten Betriebsstellung in der Schnittdarstellung mit dargestelltem Aktor 26. Der Ventilkörper 6 weist eine Ventilkörperachse 30 auf, mit der der Ventilkörper 6 um die Drehachse 11 drehbar ist. Die Ventilkörperachse 30 ist mit einem Drehhebel 30 verdrehfest verbunden, der eine Kulisse 31 aufweist. In die Kulisse 31 greift ein Kulissenstein 32 des Aktors 26 ein, sodass der Ventilkörper 6 durch den Aktor 26 zwischen dem ersten Ventilsitz 7 und dem zweiten Ventilsitz 9 drehbar ist.

Die vorliegende Erfindung ermöglicht insbesondere eine besonders kompakte Bauweise einer Sanitärarmatur.

### Bezugszeichenliste

- 1: Sanitärarmatur
- 2: Armaturengehäuse
- 3: erster Strahlbildner
- 4: zweiter Strahlbildner
- 5: Zweiwegeventil
- 6: Ventilkörper
- 7: erster Ventilsitz
- 8: erste Ablauf
- 9: zweiter Ventilsitz
- 10: zweite Ablauf
- 11: Drehachse
- 12: erste Dichtfläche
- 13: zweite Dichtfläche
- 14: erster Winkel
- 15: erster Ventilkörperarm
- 16: zweiter Ventilkörperarm
- 17: zweiter Winkel
- 18: Mischventil
- 19: Kaltwasserleitung
- 20: Warmwasserleitung
- 21: erstes Betätigungselement
- 22: Mischwasserkanal
- 23: erste Ablaufleitung
- 24: zweite Ablaufleitung
- 25: Ventilgehäuse
- 26: Aktor
- 27: erster Ablaufkanal
- 28: zweiter Ablaufkanal
- 29: Zulauf
- 30: Ventilkörper
- 31: Kulisse
- 32: Kulissenstein
- 33: zweites Betätigungselement
- 34: Auslauf

## Patentansprüche

1. Sanitärarmatur (1), zumindest aufweisend:
- ein Armaturengehäuse (2),
- einen ersten Strahlbildner (3),
- einen zweiten Strahlbildner (4), und
- ein Zweiwegeventil (5), mit dem eine Flüssigkeit wahlweise dem ersten Strahlbildner (3) oder dem zweiten Strahlbildner (4) zuführbar ist, wobei das Zweiwegeventil (5) in dem Armaturengehäuse (2) angeordnet ist und einen Ventilkörper (6) aufweist, der in einem Ventilgehäuse (25) des Zweiwegeventils (5) zwischen einem ersten Ventilsitz (7) eines ersten Ablaufs (8) des Zweiwegeventils (5) und einem zweiten Ventilsitz (9) eines zweiten Ablaufs (10) des Zweiwegeventils (5) um eine Drehachse (11) drehbar gelagert ist, wobei der Ventilkörper (6) eine erste Dichtfläche (12) für den ersten Ventilsitz (7) und eine zweite Dichtfläche (13) für den zweiten Ventilsitz (9) aufweist, wobei die erste Dichtfläche (12) und die zweite Dichtfläche (13) einen ersten Winkel (14) aufspannen, **dadurch gekennzeichnet, dass** die erste Dichtfläche (12) an einem ersten Ventilkörperarm (15) des Ventilkörpers (6) und die zweite Dichtfläche (13) an einem zweiten Ventilkörperarm (16) des Ventilkörpers (6) angeordnet sind.

2. Sanitärarmatur (1) nach Patentanspruch 1, wobei die erste Dichtfläche (12) und die zweite Dichtfläche (13) parallel zu der Drehachse (11) des Ventilkörpers (6) verlaufen.

3. Sanitärarmatur (1) nach einem der Patentansprüche 1 oder 2, wobei der erste Winkel (14) 10° bis 170° beträgt.

4. Sanitärarmatur (1) nach einem der vorhergehenden Patentansprüche, wobei der erste Ventilkörperarm (15) und der zweite Ventilkörperarm (16) einen zweiten Winkel (17) aufspannen.

5. Sanitärarmatur (1) nach einem der vorhergehenden Patentansprüche, wobei der Ventilkörper (6) V-förmig ausgebildet ist.

6. Sanitärarmatur (1) nach einem der vorhergehenden Patentansprüche, wobei die Drehachse (11) zwischen dem ersten Ablauf (8) und dem zweiten Ablauf (10) angeordnet ist.

7. Sanitärarmatur (1) nach einem der vorhergehenden Patentansprüche, wobei der erste Ablauf (8) und der zweite Ablauf (10) parallel zueinander verlaufen.

## Claims

1. A sanitary fitting (1), at least comprising:
- a fitting housing (2),
- a first jet-forming element (3),
- a second jet-forming element (4), and
- a two-way valve (5) which can be used to selectively supply a liquid to the first jet-forming element (3) or to the second jet-forming element (4), wherein the two-way valve (5) is arranged in the fitting housing (2) and has a valve body (6) which is mounted to be rotatable about an axis of rotation (11) in a valve housing (25) of the two-way valve (5) between a first valve seat (7) of a first outlet (8) of the two-way valve (5) and a second valve seat (9) of a second outlet (10) of the two-way valve (5), wherein the valve body (6) has a first sealing surface (12) for the first valve seat (7) and a second sealing surface (13) for the second valve seat (9), wherein the first sealing surface (12) and the second sealing surface (13) form a first angle (14), **characterized in that** the first sealing surface (12) is arranged on a first valve body arm (15) of the valve body (6) and the second sealing surface (13) is arranged on a second valve body arm (16) of the valve body (6).

2. The sanitary fitting (1) according to claim 1, wherein the first sealing surface (12) and the second sealing surface (13) run parallel to the axis of rotation (11) of the valve body (6).

3. The sanitary fitting (1) according to any one of the claims 1 or 2, wherein the first angle (14) is 10° to 170°.

4. The sanitary fitting (1) according to any one of the preceding claims, wherein the first valve body arm (15) and the second valve body arm (16) form a first angle (17) .

5. The sanitary fitting (1) according to any one of the preceding claims, wherein the valve body (6) is formed to be V-shaped.

6. The sanitary fitting (1) according to any one of the preceding claims, wherein the axis of rotation (11) is arranged between the first outlet (8) and the second outlet (10).

7. The sanitary fitting (1) according to any one of the preceding claims, wherein the first outlet (8) and the second outlet (10) run parallel to each other.

## Revendications

1. Robinetterie sanitaire (1), comportant au moins :
- une monture (2) de robinetterie,
- un premier formateur de jet (3),
- un deuxième formateur de jet (4) et
- une vanne à deux voies (5), à l'aide de laquelle un liquide peut être alimenté sélectivement vers le premier formateur de jet (3) ou vers le deuxième formateur de jet (4), la vanne à deux voies (5) étant placée dans le monture (2) de robinetterie et comportant un corps de vanne (6), qui est logé dans un boîtier de vanne (25) de la vanne à deux voies (5), entre un premier siège de vanne (7) d'une première évacuation (8) de la vanne à deux voies (5) et un deuxième siège de vanne (9) d'une deuxième évacuation (10) de la vanne à deux voies (5) en étant rotatif autour d'un axe de rotation (11), le corps de vanne (6) comportant une première surface d'étanchéité (12) pour le premier siège de vanne (7) et une deuxième surface d'étanchéité (13) pour le deuxième siège de vanne (9), la première surface d'étanchéité (12) et la deuxième surface d'étanchéité (13) définissant un premier angle (14), **caractérisée en ce que** la première surface d'étanchéité (12) est placée sur un premier bras (15) de corps de vanne du corps de vanne (6) et la deuxième surface d'étanchéité (13) est placée sur un deuxième bras (16) de corps de vanne du corps de vanne (6).

2. Robinetterie sanitaire (1) selon la revendication 1 du brevet, la première surface d'étanchéité (12) et la deuxième surface d'étanchéité (13) s'écoulant à la parallèle de l'axe de rotation (11) du corps de vanne (6).

3. Robinetterie sanitaire (1) selon l'une quelconque des revendications 1 ou 2 du brevet, le premier angle (14) s'élevant à de 10° à 170°.

4. Robinetterie sanitaire (1) selon l'une quelconque des revendications précédentes du brevet, le premier bras (15) de corps de vanne et le deuxième bras (16) de corps de vanne définissant un deuxième angle (17).

5. Robinetterie sanitaire (1) selon l'une quelconque des revendications précédentes du brevet, le corps de vanne (6) étant conçu en forme de V.

6. Robinetterie sanitaire (1) selon l'une quelconque des revendications précédentes du brevet, l'axe de rotation (11) étant placé entre la première évacuation (8) et la deuxième évacuation (10).

7. Robinetterie sanitaire (1) selon l'une quelconque des revendications précédentes du brevet, la première évacuation (8) et la deuxième évacuation (10) s'écoulant à la parallèle l'une de l'autre.
